# EUROPÄISCHE PATENTSCHRIFT

(11) **EP 1 252 427 B1**
(45) Veröffentlichungstag und Bekanntmachung des Hinweises auf die Patenterteilung: **09.11.2005**
(21) Anmeldenummer: 01909600.7
(22) Anmeldetag: 10.01.2001
(51) Int. Cl.: F02D 41/02

(54) **VERFAHREN ZUR TEMPORÄREN ERHÖHUNG EINER ABGASTEMPERATUR EINER VERBRENNUNGSKRAFTMASCHINE**
METHOD FOR TEMPORARILY INCREASING EXHAUST GAS TEMPERATURE OF AN INTERNAL COMBUSTION ENGINE
PROCEDE POUR L'AUGMENTATION TEMPORAIRE D'UNE TEMPERATURE DES GAZ D'ECHAPPEMENT D'UN MOTEUR A COMBUSTION INTERNE

(30) Priorität: 19.01.2000 DE 10001992
(43) Veröffentlichungstag der Anmeldung: 30.10.2002
(73) Patentinhaber: Volkswagen Aktiengesellschaft, 38436 Wolfsburg (DE)
(72) Erfinder: POTT, Ekkehard, 38518 Gifhorn (DE); PFALZGRAF, Bernhard, 85051 Ingolstadt (DE)
(74) Vertreter: Schneider, Henry
(86) Internationale Anmeldenummer: PCT/EP2001/000243
(87) Internationale Veröffentlichungsnummer: WO 2001/053664

(56) Entgegenhaltungen:
- EP-A- 0 892 158
- DE-A- 3 408 057
- DE-A- 4 029 811
- DE-A- 4 042 048
- DE-A- 19 926 138
- DE-C- 4 217 668
- US-A- 5 265 418
- PATENT ABSTRACTS OF JAPAN vol. 010, no. 299 (M-524), 11. Oktober 1986 (1986-10-11) & JP 61 112715 A (TOYOTA MOTOR CORP), 30. Mai 1986 (1986-05-30)

## Beschreibung

Die Erfindung betrifft ein Verfahren zur temporären Erhöhung einer Abgastemperatur einer Verbrennungskraftmaschine.

In bestimmten Betriebssituationen von Verbrennungskraftmaschinen ist die Erzeugung von hohen Abgastemperaturen vorteilhaft. Dies gilt insbesondere, wenn NOₓ-Speicherkatalysatoren zur Abgasnachbehandlung in Verbrennungskraftmaschinen eingesetzt werden, die in mageren Betriebsphasen Stickoxide NOₓ einlagem. Die NOₓ-Regeneration des NOₓ-Speichers erfolgt, indem der Katalysator mit stöchiometrischem oder fettem Abgas beaufschlagt wird, so dass eingelagertes NOₓ mit den im Überschuss im Abgas vorhandenen, unvollständig verbrannten Kohlenwasserstoffen HC, Kohlenmonoxid CO und Wasserstoff H₂ umgesetzt werden kann. Neben der erwünschten Absorption von NOₓ findet jedoch auch eine Einlagerung von Schwefeloxiden SOₓ im NOₓ-Speicherkatalysator statt, die nicht nur eine Speicherkapazität des Absorbers herabsetzt, sondern auch den Katalysator irreversibel schädigen kann. Für die daher in regelmäßigen Abständen erforderliche Entschwefelung werden Katalysatortemperaturen von über 650 °C benötigt, um eine Desorption von SOₓ zu bewirken.

Eine weitere Situation, in der hohe Abgastemperaturen erwünscht sind, liegt bei der Verwendung von Partikelfiltern vor, insbesondere in Dieselbrennkraftmaschinen, wenn diese aufgrund einer erreichten Partikelbeladung regeneriert werden müssen. Die Regeneration von Partikelfiltern erfolgt üblicherweise thermisch, wobei bei Filtertemperaturen von über 550 °C die Partikel am Filter abgebrannt werden.

Es ist bekannt, bei Ottomotoren durch einen späten Zündzeitpunkt die Abgastemperatur zu erhöhen. Die für die Regeneration von NOₓ-Speicherkatalysatoren erforderlichen Temperaturen sind jedoch durch Spätzündung nur bei vergleichsweise hohen Grundlasten der Verbrennungskraftmaschine darstellbar. Im Schwachlastenbereich, beispielsweise im Stadtverkehr, können die erforderlichen Abgastemperaturen durch Spätzündung allein in der Regel nicht erzeugt werden.

Ein weiteres bekanntes Verfahren bei Otto- und Dieselmotoren zur Erhöhung der Abgastemperatur ist die so genannte Nacheinspritzung, bei der unabhängig von den Betriebsparametern der Verbrennungskraftmaschine die erforderlichen Temperaturen am Katalysator beziehungsweise am Partikelfilter erreicht werden können. Nachteilig an dieser Methode ist jedoch, dass der nacheingespritzte Kraftstoff teilweise erst auf der Oberfläche des Katalysators beziehungsweise des Partikelfilters oxidiert und lokale Überhitzungen des entsprechenden Bauteiles zur Folge haben kann. Die resultierenden hohen und inhomogenen thermischen Belastungen führen zu einer deutlichen Herabsetzung der Lebensdauer von NOₓ-Speicherkatalysatoren oder Partikelfiltern.

Der Erfindung liegt die Aufgabe zugrunde, ein Verfahren vorzuschlagen, mit dem unabhängig von einer durch einen Betriebspunkt der Kraftmaschine vorgegebenen Motorlast eine Abgastemperatur temporär erhöht werden kann, ohne thermische Schädigungen von Bauelementen des Abgaskanals hervorzurufen.

Diese Aufgabe wird durch die im Anspruch 1 genannten Maßnahmen gelöst. Indem mindestens eine Maßnahme zur Anhebung einer Motorlast ergriffen wird und durch Regulation einer eingespritzten Kraftstoffmasse ein infolge der erhöhten Motorlast eingefordertes Moment weitgehend kompensiert wird, kann die Motorlast in einem gewissen Umfang von den durch den Betriebspunkt vorgegebenen Lasten entkoppelt werden, ohne den Fahrzeugbetrieb, insbesondere mit einer von einem Fahrer vorgegebenen Geschwindigkeit oder Beschleunigung, zu beeinflussen. Die gegenseitige Kompensation von Anhebung der Motorlast und Kraftstoffmehreinspritzung ermöglicht insgesamt eine momentenneutrale Abgastemperaturerhöhung.

Gemäß einer bevorzugten Ausgestaltung des Verfahrens wird die Abgastemperatur auf eine für die Entschwefelung eines in einem Abgaskanal angeordneten NOₓ-Speicherkatalysators erforderliche Mindesttemperatur angehoben.

Entsprechend einer weiteren vorteilhaften Ausgestaltung wird zur Regeneration eines in einem Abgaskanal angeordneten Partikeifilters, insbesondere eines Rußpartikelfilters eines Dieselmotors, die Abgastemperatur auf die erforderliche Mindesttemperatur angehoben.

Nach einer vorteilhaften Ausgestaltung des Verfahrens besteht die Maßnahme zur Anhebung der Motorlast in der Zuschaltung mindestens eines elektrischen, mechanischen und/oder hydraulischen Verbrauchers. Da die Leistung des zugeschalteten Verbrauchers zum Zeitpunkt der gewünschten Abgastemperaturerhöhung nicht vom Fahrer abgerufen wird, ist bevorzugt, dass die zugeschalteten Maßnahmen möglichst keine für den Fahrer wahrnehmbaren Wirkungen zeigen, um Komforteinbußen oder Irritationen zu vermeiden.

Als geeignete Maßnahme zur Anhebung der Motorlast ist beispielsweise vorgesehen die Zuschaltung einer elektrischen Zuheizvorrichtung, einer Heckscheiben-, Frontscheiben- oder Spiegelheizung, einer Kühlmittelheizvorrichtung, einer Sitzheizung eines nicht belegten Sitzes oder einer Ladevorrichtung für einen Energiespeicher.

Gemäß einer weiteren vorteilhaften Ausgestaltung des Verfahrens besteht die Maßnahme in der Zuschaltung einer Klimaanlage. Dabei ist besonders bevorzugt, die zusätzlich erzeugte Kaltluft in die Umgebung abzuführen oder, falls dies nicht möglich ist, die Kaltluft mit Warmluft zu kompensieren und in den Fahrzeuginnenraum zu leiten.

Eine weitere Ausführungsform sieht als Maßnahme zur Anhebung der Motorlast eine Aufschaltung eines Bremseingriffs vor, wobei eine Fahrzeuggeschwindigkeit konstant zu halten ist.

Als weitere Maßnahmen denkbar sind eine Änderung eines Schaltpunktes eines Stufenautomatikgetriebes beziehungsweise eine Änderung einer Übersetzung eines stufenlosen Automatikgetriebes.

Nach einer äußerst bevorzugten Ausgestaltung wird das Verfahren in Kombination mit einem oder mehreren weiteren Verfahren zur Erhöhung der Abgastemperatur eingesetzt. Es kommen die an sich bekannten Verfahren der Spätzündung und/oder der Nacheinspritzung zum Einsatz. Besonders bevorzugt ist bei Ottomotoren die Kombination des erfindungsgemäßen Verfahrens mit der Spätzündung, wobei mindestens eine der erfindungsgemäßen Maßnahme zur Anhebung der Motorlast ergriffen wird, wenn durch Spätzündung allein eine erforderliche Abgastemperatur nicht erzeugt werden kann.

Ebenso kann es vorteilhaft sein, in Abhängigkeit einer aktuellen Motorlast mehrere Maßnahmen zur Anhebung der Motorlast in geeigneter Reihenfolge aufeinanderfolgend zuzuschalten oder auszuschalten. Weitere Ausgestaltungen des Verfahrens sind Gegenstand der übrigen Unteransprüche.

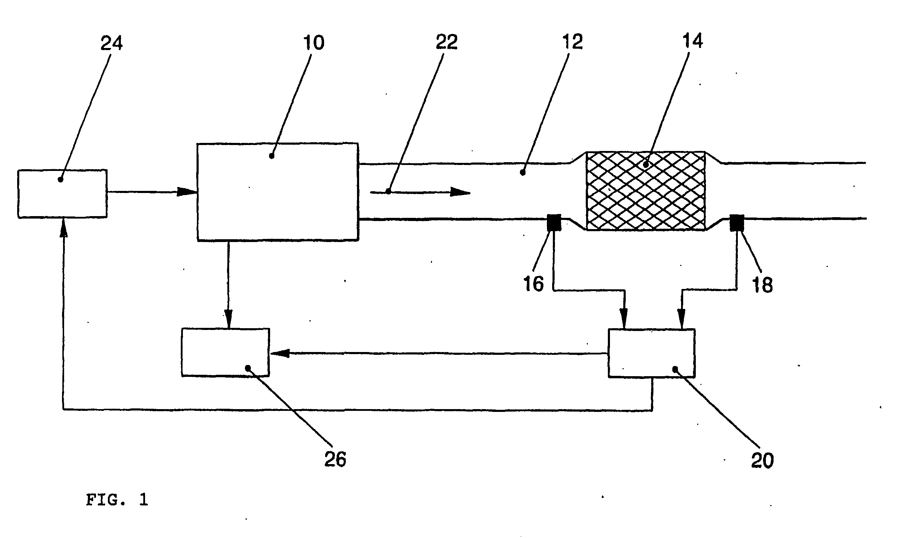

Die Erfindung wird nachfolgend in einem Ausführungsbeispiel anhand der einzigen Zeichnung näher erläutert.

Die einzige Figur zeigt eine Verbrennungskraftmaschine 10 mit einem in einem Abgaskanal 12 angeordneten NOₓ-Speicherkatalysator 14. Zur Erfassung einer Katalysatortemperatur sind vor und hinter dem NOₓ-Speicherkatalysator 14 jeweils eine Temperatursonde 16, 18 angeordnet. Die von den Temperatursonden 16, 18 erfassten Temperatursignale vor und hinter dem NOₓ-Speicherkatalysator 14 werden an ein Motorsteuergerät 20 weitergegeben, welches hieraus eine an dem NOₓ-Speicherkatalysator 14 vorliegende Temperatur errechnet. Es ist jedoch auch denkbar, die Katalysatortemperatur nur auf der Basis des Temperatursignals 16 zu berechnen oder alleine auf der Basis des Motorbetriebspunktes die Katalysatortemperatur zu modellieren. Femer findet eine Vielzahl weiterer Signale, die einen Betriebszustand der Verbrennungskraftmaschine 10 kennzeichnen, Eingang in das Motorsteuergerät 20. Zu diesen Signalen gehören eine Motordrehzahl n, ein Lambdawert λ sowie eine Fahrzeuggeschwindigkeit v. Ein Entschwefelungsvorgang wird eingeleitet, wenn beispielsweise mittels - hier nicht dargestellter - Gassensoren auf eine Schwefelvergiftung des NOₓ-Speicherkatalysators 14 geschlossen wird. Liegt eine so genannte Entschwefelungsnotwendigkeit vor, so beeinflusst das Motorsteuergerät 20 in einem ersten Schritt mindestens einen der Betriebsparameter der Verbrennungskraftmaschine 10, um eine Temperatur des Abgases 22 zu erhöhen. In dieser Phase wird die Verbrennungskraftmaschine 10 beispielsweise unter Spätzündung betrieben. Die resultierende Temperaturerhöhung am NOₓ-Speicherkatalysator 14 wird von den Temperatursonden 16, 18 erfasst und durch das Motorsteuergerät 20 bewertet. Reicht zu diesem Zeitpunkt die durch den Betriebspunkt des Fahrzeuges vorgegebene Motorlast nicht aus, um mittels Spätzündung die erforderliche Katalysatortemperatur zu erreichen, steuert das Motorsteuergerät 20 ein Kraftstoff-Zumess-System 24 an, um eine der Verbrennungskraftmaschine 10 zugeführte Kraftstoffmenge zu erhöhen. Gleichzeitig schaltet das Motorsteuergerät 20 einen elektrischen Verbraucher 26 zu, der die aus der Mehreinspritzung gewonnene Energie abnimmt. Auf diese Weise bleibt ein durch den Fahrer vorgegebenes Fahrmoment, etwa eine Fahrzeuggeschwindigkeit oder Beschleunigung, unbeeinflusst. Sobald keine Zusatzmaßnahmen zur Erhöhung der Abgastemperatur mehr nötig sind, wird der elektrische Verbraucher 26 wieder abgeschaltet und die eingespritzte Kraftstoffmenge durch das Kraftstoff-Zumess-System 24 gedrosselt. Die weiteren Entschwefelungsmaßnahmen, die in erster Linie aus einer Beaufschlagung des NOₓ-Speicherkatalysators 14 mit fettem Abgas bestehen, sind bekannt und sollen hier nicht näher erläutert werden.

Statt den Erfolg der Abgastemperaturerhöhung durch Spätzündung anhand der Temperatursonden 16, 18 zu kontrollieren, ist es ebenso denkbar, dass das Motorsteuergerät 20, basierend auf aktuellen Betriebsparametern der Verbrennungskraftmaschine 10, eine resultierende Abgastemperatur berechnet. Hierfür können auch im Steuergerät 20 abgespeicherte Kennfelder herangezogen werden. Ebenso kann das Erfordernis der Zuschaltung des elektrischen Verbrauchers 26 anhand einer aktuellen Motorlast von dem Motorsteuergerät 20 direkt festgestellt und durchgeführt werden, ohne zunächst einen ohne Zusatzlast erreichbaren Temperaturanstieg abzuwarten.

Das vorstehend erläuterte Ausführungsbeispiel verdeutlicht, dass das erfindungsgemäße Verfahren zur temporären Erhöhung einer Abgastemperatur sich äußerst einfach in einer Anlage einer Verbrennungskraftmaschine realisieren lässt, da keine zusätzlichen Bauelemente erforderlich sind. Auf der einen Seite wird zur Erhöhung der Motorlast ausschließlich auf im Fahrzeug vorhandene Verbraucher zurückgegriffen, andererseits lässt sich die gesamte Steuerung des Verfahrens mittels eines üblicherweise vorhandenen Motorsteuergerätes realisieren. Thermische Schädigungen des Katalysators, wie sie bei Nacheinspritzungsmaßnahmen beobachtet werden, sind bei Anwendung des erfindungsgemäßen Verfahrens nicht zu erwarten. Das Verfahren kann unabhängig von einem vorliegenden Betriebspunkt der Verbrennungskraftmaschine eingesetzt werden, so dass auch bei niedrigen Geschwindigkeiten eine erforderliche Abgastemperatur erreicht werden kann. Die momentenneutrale Durchführung des Verfahrens, welche durch die weitgehende Kompensation der erhöhten Motorlast und der zusätzlich eingespritzten Kraftstoffmasse erreicht wird, bewirkt schließlich eine hohe Komfortabilität für den Fahrer.

## Patentansprüche

1. Verfahren zur temporären Erhöhung einer Abgastemperatur einer Verbrennungskraftmaschine (10), wobei
(a) mindestens eines der Verfahren, umfassend Spätzündung und Nacheinspritzung, zur Erhöhung der Abgastemperatur angewandt wird und
(b) wenn mit dem mindestens einen Verfahren allein eine erforderliche Abgastemperatur nicht erzeugt werden kann, in Abhängigkeit einer aktuellen Motorlast der Verbrennungskraftmaschine (10) mindestens eine Maßnahme zur Anhebung der Motorlast zugeschaltet wird und
(c) durch Erhöhung einer eingespritzten Kraftstoffmasse ein infolge der erhöhten Motorlast eingefordertes Moment weitgehend kompensiert wird.

2. Verfahren nach Anspruch 1, **dadurch gekennzeichnet, dass** zur Entschwefelung eines in einem Abgaskanal angeordneten NOₓ-Speicherkatalysators (14) die Abgastemperatur auf eine erforderliche Mindesttemperatur angehoben wird.

3. Verfahren nach Anspruch 1, **dadurch gekennzeichnet, dass** zur Regeneration eines in einem Abgaskanal angeordneten Partikelfilters, insbesondere eines Rußpartikeifilters, die Abgastemperatur auf eine erforderliche Mindesttemperatur angehoben wird.

4. Verfahren nach mindestens einem der vorhergehenden Ansprüche, **dadurch gekennzeichnet, dass** die Maßnahme zur Anhebung der Motorlast in der Zuschaltung mindestens eines elektrischen, mechanischen und/oder hydraulischen Verbrauchers besteht.

5. Verfahren nach mindestens einem der vorhergehenden Ansprüche, **dadurch gekennzeichnet, dass** die Maßnahme die Zuschaltung einer elektrischen Zuheizvorrichtung, einer Heckscheiben-, Frontscheiben- oder Spiegelheizung, einer Kühlmittelheizvorrichtung, einer Sitzheizung eines nichtbelegten Sitzes oder einer Ladevorrichtung für einen Energiespeicher ist.

6. Verfahren nach mindestens einem der vorhergehenden Ansprüche, **dadurch gekennzeichnet, dass** die Maßnahme in der Zuschaltung einer Klimaanlage besteht.

7. Verfahren nach Anspruch 6, **dadurch gekennzeichnet, dass** eine zusätzliche erzeugte Kaltluft in die Umgebung abgeführt wird oder mit Warmluft kompensiert wird und in den Fahrzeuginnenraum geleitet wird.

8. Verfahren nach mindestens einem der vorhergehenden Ansprüche, **dadurch gekennzeichnet, dass** die Maßnahme eine Aufschaltung eines Bremseingriffs unter Konstanthaltung einer Fahrzeuggeschwindigkeit ist.

9. Verfahren nach mindestens einem der vorhergehenden Ansprüche, **dadurch gekennzeichnet, dass** die Maßnahme eine Änderung eines Schaltpunktes eines Stufenautomatikgetriebes ist.

10. Verfahren nach mindestens einem der vorhergehenden Ansprüche, **dadurch gekennzeichnet, dass** die Maßnahme eine Änderung einer Übersetzung eines stufenlosen Automatikgetriebes ist.

11. Verfahren nach mindestens einem der vorhergehenden Ansprüche, **dadurch gekennzeichnet, dass** in Abhängigkeit einer aktuellen Motorlast mehrere Maßnahmen zur Anhebung der Motorlast aufeinanderfolgend zugeschaltet oder ausgeschaltet werden.

## Claims

1. Method for temporarily raising an exhaust-gas temperature of a combustion engine (10), wherein
a) at least one of the methods comprising retarded ignition and retarded injection is used to raise the exhaust-gas temperature and
b) if a required exhaust-gas temperature cannot be achieved with the at least one method alone, at least one additional measure for increasing the engine loading dependent upon a current engine loading of the combustion engine (10) is implemented and
c) a moment required as a result of the increased engine loading is largely compensated by increasing a quantity of fuel injected.

2. Method according to claim 1,
**characterised in that**
the exhaust-gas temperature is raised to a minimum temperature required for the desulfuring of an NOₓ storage catalyst (14) arranged in an exhaust gas duct.

3. Method according to claim 1,
**characterised in that**
the exhaust-gas temperature is raised to a minimum temperature required for the regeneration of a particle filter, especially a soot-particle filter, arranged in an exhaust-gas duct.

4. Method according to at least one of the preceding claims,
**characterised in that**
the measure for increasing the engine loading consists in the additional connection of at least one electrical, mechanical and/or hydraulic consumer.

5. Method according to at least one of the preceding claims,
**characterised in that**
the measure comprises the additional connection of a supplementary electrical heater, a rear windscreen heater, front windscreen heater or mirror heater, a coolant heater, a seat heater for an un-occupied seat or a re-charging device for an energy store.

6. Method according to at least one of the preceding claims,
**characterised in that**
the measure consists in the additional connection of an air-conditioning unit.

7. Method according to claim 6,
**characterised in that**
additionally generated cold air is released into the environment or compensated with hot air and fed into the interior of the vehicle.

8. Method according to at least one of the preceding claims,
**characterised in that**
the measure is an application of a braking action, while maintaining a constant vehicle velocity.

9. Method according to at least one of the preceding claims,
**characterised in that**
the measure is a modification of an operating point of a multi-step automatic gearbox.

10. Method according to at least one of the preceding claims,
**characterised in that**
the measure is a modification of a transmission of an infinitely-variable automatic gearbox.

11. Method according to at least one of the preceding claims,
**characterised in that**
several measures for increasing the engine loading are additionally implemented or cut out successively dependent upon a current engine loading.

## Revendications

1. Procédé destiné à l'augmentation temporaire d'une température de gaz d'échappement d'un moteur à combustion interne (10), dans lequel
(a) au moins l'un des procédés comprenant un retard à l'allumage et une post-injection est utilisé pour l'augmentation de la température des gaz d'échappement,
(b) si une température nécessaire des gaz d'échappement ne peut pas être atteinte avec le, au moins un, procédé, au moins une mesure est prise pour l'augmentation de la charge du moteur en fonction d'une charge réelle du moteur à combustion interne (10), et
(c) un couple demandé suite à l'augmentation de la charge du moteur est dans une large mesure compensé par une augmentation de la masse de carburant injecté.

2. Procédé selon la revendication 1, **caractérisé en ce que,** pour la désulfuration d'un catalyseur à accumulation de NOₓ (14) disposé dans un tuyau de gaz d'échappement, la température des gaz d'échappement est portée à une température minimale nécessaire.

3. Procédé selon la revendication 1, **caractérisé en ce que,** pour la régénération d'un filtre à particules disposé dans un tuyau de gaz d'échappement, notamment d'un filtre à particules de noir de carbone, la température des gaz d'échappement est portée à une température minimale nécessaire.

4. Procédé selon l'une au moins des revendications précédentes, **caractérisé en ce que** la mesure pour l'augmentation de la charge du moteur consiste à faire fonctionner au moins un consommateur électrique, mécanique et/ou hydraulique.

5. Procédé selon l'une au moins des revendications précédentes, **caractérisé en ce que** la mesure consiste à faire fonctionner un dispositif de chauffage électrique, un chauffage de la lunette arrière, du pare-brise ou du rétroviseur, un dispositif de chauffage d'agent de refroidissement, un chauffage d'un siège non occupé ou un dispositif de charge pour un accumulateur d'énergie.

6. Procédé selon l'une au moins des revendications précédentes, **caractérisé en ce que** la mesure consiste à faire fonctionner une installation de climatisation.

7. Procédé selon la revendication 6, **caractérisé en ce qu'**un air froid engendré de façon supplémentaire est évacué dans l'atmosphère ou compensé avec de l'air chaud, et introduit dans l'habitacle du véhicule.

8. Procédé selon l'une au moins des revendications précédentes, **caractérisé en ce que** la mesure consiste en une intervention de freinage avec maintien à vitesse constante du véhicule.

9. Procédé selon l'une au moins des revendications précédentes, **caractérisé en ce que** la mesure est une modification d'un point de commutation d'une boîte de vitesses automatique à action progressive.

10. Procédé selon l'une au moins des revendications précédentes, **caractérisé en ce que** la mesure est une modification d'une démultiplication d'une boîte de vitesses automatique à action non progressive.

11. Procédé selon l'une au moins des revendications précédentes, **caractérisé en ce que**, en fonction d'une charge réelle du moteur, plusieurs mesures sont prises ou coupées successivement pour l'augmentation de la charge du moteur.
